# EUROPÄISCHE PATENTSCHRIFT

(11) **EP 3 901 027 B1**
(45) Veröffentlichungstag und Bekanntmachung des Hinweises auf die Patenterteilung: **06.08.2025**
(21) Anmeldenummer: 21174037.8
(22) Anmeldetag: 23.12.2013
(51) Int. Cl.: B63B 34/10, B63C 11/46, B60L 3/00, A63B 35/12

(54) **WASSERFAHRZEUG MIT FLUTUNGSRAUM**
WATER VESSEL WITH FLOODING SPACE
EMBARCATION À CHAMBRE D'IMMERSION

(30) Priorität: 18.01.2013 DE 102013100544
(43) Veröffentlichungstag der Anmeldung: 27.10.2021
(62) Teilanmeldung aus: 18157394.0
(73) Patentinhaber: CAYAGO TEC GmbH, 32108 Bad Salzuflen (DE)
(72) Erfinder: WALPURGIS, Hans-Peter, 32108 Bad Salzuflen (DE)
(74) Vertreter: Herrmann, Jochen

(56) Entgegenhaltungen:
- DE-A1- 3 523 758
- FR-A1- 2 915 172
- US-A- 2 722 021
- US-A- 3 412 705
- US-A- 3 841 258
- US-A- 4 341 177
- US-A- 4 718 870
- US-A- 5 158 034
- US-A1- 2001 025 594
- US-B1- 6 461 204

## Beschreibung

Die Erfindung betrifft ein Wasserfahrzeug mit einem Rumpf, der einen Strömungskanal aufweist oder dem ein Strömungskanal zugeordnet ist, wobei dem Strömungskanal eine motorbetriebene Wasser-Beschleunigungsanordnung, insbesondere ein Propeller zugeordnet ist.

Ein derartiges Wasserfahrzeug ist aus der DE 10 2004 049 615 A1 bekannt. Solche Wasserfahrzeuge werden insbesondere als Tauchschlitten eingesetzt. Sie weisen eine Griffanordnung auf, an der sich ein Benutzer festhalten kann, während er mit einem Teilbereich seines Oberkörpers oberseitig auf dem Rumpf des Wasserfahrzeuges aufliegt. Innerhalb des Rumpfes ist ein Strömungskanal angeordnet, in dem ein Propeller untergebracht ist. Der Propeller wird von einem Elektromotor angetrieben der über einen Akkumulator mit Strom versorgt. Während des Betriebseinsatzes erzeugen der Akkumulator und auch der Motor Abwärme, die in die Umgebung abgetauscht werden muss um einen zuverlässigen Dauerbetrieb aufrechterhalten zu können. Zu diesem Zweck sind die Akkumulatoren in ein Aluminiumgehäuse eingesetzt, wobei die Akkumulatoren mit dem Aluminiumgehäuse in wärmeleitendem Kontakt stehen. Der Rumpf weist eine unterseitige Aufnahme auf, in die das Aluminiumgehäuse eingesetzt und hierin verriegelt werden kann. Auf diese Weise steht das Aluminiumgehäuse unterseitig mit dem strömenden Wasser in Verbindung und es kann hier ein Wärmeabtausch erfolgen.

Der Elektromotor ist zum Zwecke der Kühlung innerhalb des Strömungskanals angeordnet. Das durch den Strömungskanal geführte Wasser wird um ein Gehäuse des Elektromotors geleitet, wodurch eine effektive Motorkühlung möglich wird. Der Elektromotor schränkt den freien Strömungsquerschnitt im Strömungskanal ein. Der Strömungskanal muss daher ausreichend groß dimensioniert werden um die Abschattung, die durch den Elektromotor bewirkt wird, zu kompensieren. Hierdurch wird die Baugröße des Wasserfahrzeuges beeinflusst.

Um mit den bekannten Wasserfahrzeugen sowohl einen Fahrbetrieb unter Wasser als auch auf dem Wasser durchführen zu können, ist eine genaue Gewichtstarierung erforderlich. Dementsprechend sollte das Wasserfahrzeug so viel Auftrieb entwickeln, dass es ausreichend schwimmfähig ist und mithin nicht untergehen kann. Der Auftrieb sollte allerdings nicht zu stark sein, sodass ein schneller Wechsel von der Überwasserfahrt auf die Tauchfahrt möglich ist. Aufgrund des Eigengewichts der elektrischen Einbauten muss das Wasserfahrzeug im Rumpf einen ausreichend großen Auftriebskörper aufweisen, der die Baugröße und damit die Fahrdynamik des Wasserfahrzeuges beeinflusst.

Aus US 4 341 177 A ist ein Wasserfahrzeug bekannt, das einen Strömungskanal und einen Flutungsraum aufweist.

Es ist Aufgabe der Erfindung, ein Wasserfahrzeug der eingangs erwähnten Art bereitzustellen, das mit ausreichender Betriebssicherheit eine hohe Fahrdynamik bietet.

Diese Aufgabe wird dadurch gelöst, dass der Rumpf einen Flutungsraum aufweist, der über Wasserdurchtrittsöffnungen, insbesondere Wassereintritts- und Wasseraustrittsöffnungen mit der Umgebung in Verbindung steht.

Der Flutungsraum bietet mithin eine variable Massenkomponente mit der das Eigengewicht des Wasserfahrzeuges beeinflusst werden kann. Während des Betriebes füllt sich der Flutungsraum. Beim Abtauchen des Wasserfahrzeuges wird Luft aus dem Flutungsraum verdrängt und das Wasserfahrzeug kann schnell und einfach abtauchen. Wenn das Wasserfahrzeug nach dem Gebrauch aus dem Wasser gehoben wird, so entleert sich die Flutungskammer und beeinflusst nicht das Transportgewicht des Wasserfahrzeuges.

Gemäß einer bevorzugten Erfindungsvariante kann es vorgesehen sein, dass in dem Flutungsraum wenigstens eine elektrische Baueinheit angeordnet ist. Der Flutungsraum wird mithin zusätzlich zur Kühlung der elektrischen Baueinheit verwendet. Die elektrische Baueinheit kann ihre Verlustwärme an das im Flutungsraum strömende Wasser abgeben. Ein effektiver Wärmetausch ist insbesondere deswegen möglich, da der Flutungsraum sowohl über Wassereintrittsals auch Wasseraustrittsöffnungen mit der Umgebung in Verbindung steht. Mithin ist also eine Strömung im Flutungsraum erzeugbar über die kontinuierlich kühles Wasser nachgeführt wird. Abhängig von der Fahrgeschwindigkeit des Wasserfahrzeuges kann dann auch die Strömungsgeschwindigkeit im Flutungsraum variieren. Dies hat den Vorteil, dass bei schneller Fahrt, bei der auch eine hohe Verlustwärme erzeugt wird, ein hohes Kühlvolumen zur Verfügung steht.

Als elektrische Baueinheit können beispielsweise die Steuerelektronik, der die Wasser-Beschleunigungsanordnung antreibende Elektromotor und/oder ein Energiespeicher im Flutungsraum angeordnet sein. Diese Baueinheiten erzeugen relativ hohe Verlustleistungen und eignen sich daher besonders zum Einsatz im Flutungsraum.

Für das Wasserfahrzeug ergibt sich dann eine einfache Bauweise wenn vorgesehen ist, dass der Rumpf ein Oberteil und ein Unterteil aufweist, zwischen denen der Flutungsraum gebildet ist, und dass das Ober- und/oder das Unterteil zumindest bereichsweise die Außenhülle des Rumpfes bilden.

Vorteilhafterweise kann vorgesehen sein, dass das Unterteil lösbar mit dem Oberteil verbunden ist. Dann kann zum Zwecke der einfachen Wartung der Flutungsraum zugänglich gemacht werden. Wenn beispielsweise Verschmutzungen in den Flutungsraum eingedrungen sind, lassen sich diese wieder einfach entfernen. Falls im Flutungsraum elektrische Baueinheiten angeordnet sind, können diese nach Abnahme des Unterteils einfach gewartet bzw. ausgetauscht werden.

Eine effektive Durchströmung des Flutungsraumes kann dadurch erreicht werden, dass der Rumpf zumindest eine Eintrittsöffnung im Bereich des Bugs und zumindest eine Austrittsöffnung im Bereich des Hecks bildet.

Eine bevorzugte Erfindungsvariante ist dergestalt, dass der Strömungskanal zumindest bereichsweise im Bereich des Flutungsraums angeordnet ist und den freien Querschnitt des Flutungsraums verjüngt, und dass im Bereich des verjüngten Querschnitts eine elektrische Baueinheit angeordnet ist. Durch die Querschnittsverjüngung kann die Strömungsgeschwindigkeit im Flutungsraum verändert werden. Dementsprechend erhöht sich die Strömungsgeschwindigkeit bereichsweise im verjüngten Querschnitt, sodass die Kühlleistung hierdurch beeinflusst werden kann.

Denkbar ist es auch, dass in dem Flutungsraum zwei Teilbereiche baulich gegeneinander abgegrenzt sind, wobei jedem Teilbereich eine Wassereintritts- und/oder Wasseraustrittsöffnung zugeordnet ist. Auch durch diese Maßnahme lässt sich gezielt der Volumenstrom in den einzelnen Teilbereichen und damit die Kühlleistung beeinflussen.

Erfindungsgemäß grenzt der Strömungskanal zwei Teilbereiche im Flutungsraum gegeneinander zumindest bereichsweise ab. In jedem der Teilbereiche ist eine elektrische Baueinheit angeordnet. Dadurch, dass der Strömungskanal zur Bereichsabgrenzung herangezogen wird, lässt sich der Teileaufwand verringern.

Eine mögliche Erfindungsvariante ist dergestalt, dass die elektrische Baueinheit mittels einer Aufhängung befestigt ist, und dass die Aufhängung die elektrische Baueinheit beabstandet zu den Flutungsraum begrenzenden Wandelementen hält. Auf diese Weise kann eine großflächige Umströmung der elektrischen Baueinheit und damit einhergehend eine effektive Wärmeabfuhr erzielt werden.

Eine bevorzugte Ausgestaltung der Erfindung sieht vor, dass das Wasserfahrzeug bei geflutetem Flutungsraum einen Auftrieb von mindestens 4 Kilogramm aufweist. Hierdurch wird das Wasserfahrzeug auch bei Seegang ausreichend schwimmfähig gehalten. Besonders vorteilhaft ist es, wenn der Auftrieb des Wasserfahrzeuges mindestens 7 Kilogramm beträgt. Dann kann im Schadensfall eine ausreichende Auftriebskraft zur Verfügung gestellt werden, die sowohl das Wasserfahrzeug als auch den Benutzer schwimmfähig hält.

Die Erfindung wird im Folgenden anhand eines in den Zeichnungen dargestellten Ausführungsbeispiels näher erläutert. Es zeigen:
- Fig. 1: in perspektivischer Seitenansicht von hinten ein Wasserfahrzeug,
- Fig. 2: das Wasserfahrzeug gemäß Fig. 1 in perspektivischer Seitenansicht von unten und mit abgenommenem Unterteil,
- Fig. 3: einen Vertikalschnitt durch den Heckbereich des Wasserfahrzeuges gemäß der Ansicht nach Fig. 2 und
- Fig. 4: das Wasserfahrzeug gemäß Fig. 2 in Detailansicht von unten.

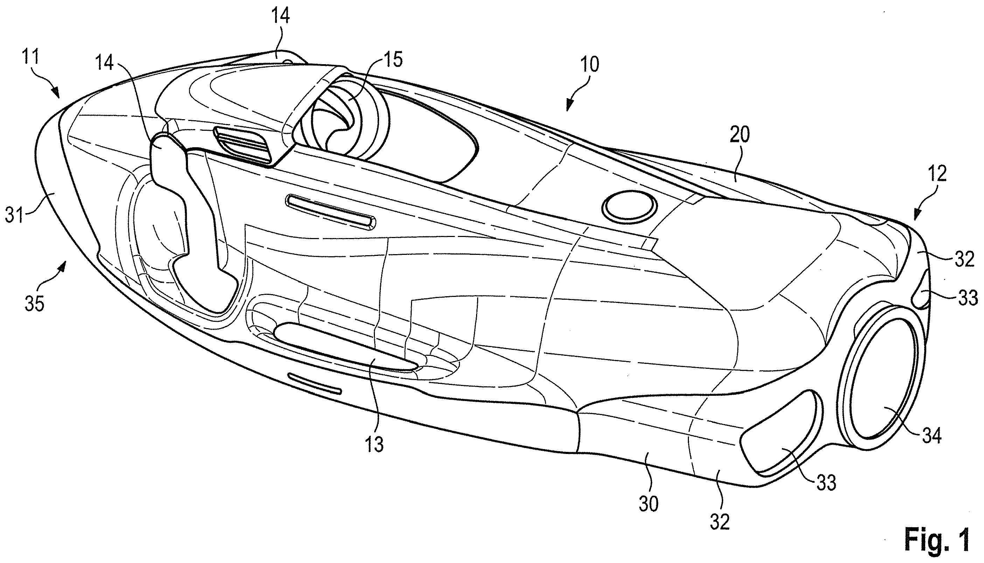

In Fig. 1 ist ein Wasserfahrzeug gezeigt, dass einen Rumpf 10 aufweist. Dabei ist der Rumpf 10 aus einem Oberteil 20 und einem Unterteil 30 zusammengesetzt. Das Oberteil ist mit zwei Steuergriffen 14 ausgerüstet die beidseitig des Rumpfes 10 angeordnet sind. An diesen Steuergriffen14 kann sich ein Benutzer festhalten und das Wasserfahrzeug mit an den Steuergriffen 14 angebrachten Bedienelementen steuern. Insbesondere kann hier die Motorleistung des Wasserfahrzeuges variiert werden. Der Benutzer, der sich an den Steuergriffen 14 festhält, liegt mit seinem Oberkörper im Bereich hinter einem Display 15 bereichsweise auf dem Oberteil 20 auf.

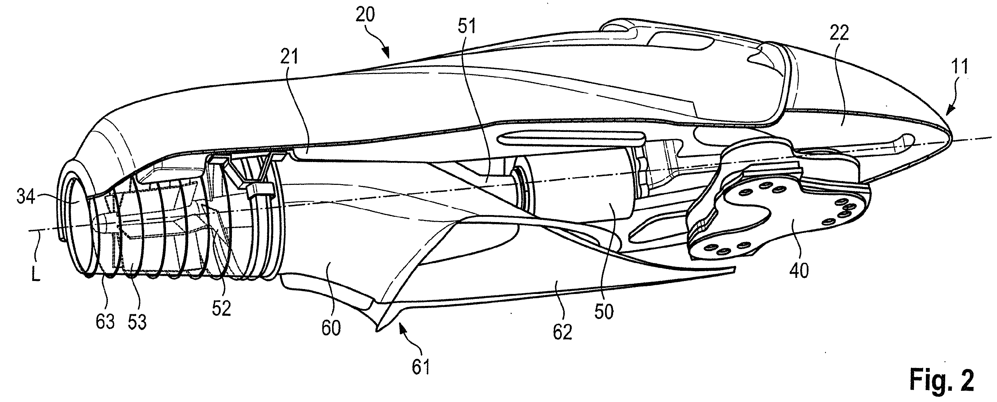

Wie Fig. 2 erkennen lässt, kann das Unterteil 30 vom Oberteil 20 demontiert werden. Es ist zu diesem Zwecke an das Oberteil 20 angeschraubt. Fig. 2 zeigt das Wasserfahrzeug bei abgenommenem Unterteil 30. Wie diese Darstellung erkennen lässt, ist mithin zwischen dem Oberteil 20 und dem Unterteil 30 ein Aufnahmeraum gebildet. Dieser Aufnahmeraum wird zur Oberseite mittels einer Bodenwand 22 des Oberteils 20 begrenzt. An dieser Bodenwand 22 können stabil Komponenten des Wasserfahrzeuges montiert werden.

Wie Fig. 2 erkennen lässt, ist im Bereich des Bugs 11 des Wasserfahrzeuges eine Steuerelektronik 40 montiert. In Richtung zum Heck 12 versetzt ist hinter der Steuerelektronik 40 ein als Elektromotor 50 ausgeführtes Antriebsaggregat geschützt in einem Gehäuse untergebracht. Die Abtriebswelle des Motors 50 ist durch ein Hüllrohr 51 hindurchgeführt und trägt an seinem freien Ende einen Propeller 52. Der Propeller 52 ist in einem Strömungskanal 60 angeordnet. Dabei wird der Strömungskanal 60 von einem Hohlkörper gebildet, der im Bereich der Unterseite des Wasserfahrzeuges eine Ansaugöffnung 61 bildet. Diese Ansaugöffnung 61 ist mit einem mittig in der Ansaugöffnung 61 angeordneten Leitelement 62 stabilisiert. Das Leitelement 62 hat zusätzlich zu seiner mechanischen Schutzfunktion die Aufgabe den Fahrbetrieb zu stabilisieren. Es wirkt dabei ähnlich wie das Schwert eines Segelbootes. Weiterhin schützt das Leitelement 62 auch den Strömungskanal 61 im, Bereich der Ansaugöffnung vor mechanischer Beanspruchung, wenn das Wasserfahrzeug auf Grund läuft oder an Land abgelegt wird. Im Bereich zwischen dem Oberteil 20 und dem Unterteil 30 ist, wie vorstehend erwähnt wurde, unterhalb der Bodenwand 22 ein Aufnahmeraum gebildet, in dem die elektrischen Komponenten, nämlich die Steuerelektronik 40, der Motor 50 und die Energiespeicher 70 (Akkumulatoren) untergebracht sind. Dieser Aufnahmeraum steht über Wasserdurchtrittsöffnungen mit der Umgebung in Verbindung. Dabei sind die Wasserdurchtrittsöffnungen im Unterteil 30 ausgebildet. Wie Fig. 1 erkennen lässt, sind die Wasserdurchtrittsöffnungen im Bereich des Bugs 11 als Wassereintrittsöffnungen 35 und im Bereich des Hecks 12 als Wasseraustrittsöffnungen 33 ausgeführt. Der Aufnahmeraum bildet mithin einen Flutungsraum. Dieser wird, sobald das Wasserfahrzeug in das Wasser gesetzt wird mit Wasser geflutet, das durch die Wasserdurchtrittsöffnungen eindringt. Sobald das Wasserfahrzeug in den Fahrbetrieb übergeht, wird im Flutungsraum eine Strömung erzeugt. Dementsprechend tritt Wasser durch die Wassereintrittsöffnungen 35 in den Flutungsraum ein. Das Wasser durchströmt den Flutungsraum und umspült dabei die im Flutungsraum gehaltenen elektrischen Baueinheiten. Dabei nimmt das Wasser die Verlustleistung der elektrischen Baueinheiten auf und kühlt diese. Nach Durchströmen des Flutungsraums verlässt das Wasser diesen durch die Wasseraustrittsöffnungen 33, die symmetrisch beidseitig des Strahlaustritts 34 angeordnet sind.

Fig. 2 lässt weiter erkennen, dass der Strömungskanal 60 im Bereich des Flutungsraums verläuft und zwei Teilbereiche im Flutungsraum gegeneinander bereichsweise abgrenzt. In jedem der Teilbereiche ist jeweils ein Energiespeicher (Akkumulator) angeordnet. Jeder der Teilbereiche weist auch eine der beiden Wasseraustrittsöffnungen 33 auf. Die elektrischen Baueinheiten sind mittels Aufhängungen an der Bodenwand 22 des Oberteils 20 angebracht. Dabei ist die Aufhängung so gewählt, dass die elektrischen Baueinheiten an den Bereichen, über die die Verlustwärme abgetauscht wird, beabstandet zu der Bodenwand 22 gehalten sind. Damit kann das Wasser im Flutungsraum die Baueinheiten hier effektiv umströmen. Es hat sich gezeigt, dass die Anordnung des Strömungskanals 60 im Flutungsraum eine Querschnittsverjüngung des Flutungsraums mit sich bringt. Dadurch wird eine Erhöhung der Strömungsgeschwindigkeit im verjüngten Bereich erzielt. Durch diese Geschwindigkeitsvariation lässt sich, abhängig von der zu kühlenden elektrischen Komponente gezielt die Wasserströmung und damit die Kühlwirkung einstellen. Im vorliegenden Ausführungsbeispiel sind die Energiespeicher 70 im Bereich der verjüngten Querschnitte in den Teilbereichen angeordnet.

An seinem der Ansaugöffnung 61 in Strömungsrichtung abgewandten Ende bildet der Hohlkörper einen Flanschbereich an dem ein in Impellergehäuse 63 angeflanscht werden kann. Der Propeller 52 ragt in das Impellerghäuse 63. In Strömungsrichtung hinter dem Propeller 52 ist ein Strömungsstator 53 angeordnet. Während des Betriebs saugt der Propeller 52 Wasser durch die Ansaugöffnung 61 in den Strömungskanal 16, beschleunigt diese und stößt es durch das Impellergehäuse 63 im Bereich eines Strahlaustritts 34 aus. Der Stator 53 hat dabei die Aufgabe die rotierende Wasserbewegung geradezurichten, sodass zum Zwecke einer Wirkungsgradverbesserung die Strömung am Strahlaustritt möglichst drallfrei austritt.

Wie Fig. 1 erkennen lässt, besitzt das Oberteil 20 im Bereich der Bodenwand 22 Aufnahmen 21. Diese Aufnahmen 21 sind beidseitig des Strömungskanals 60 angeordnet.

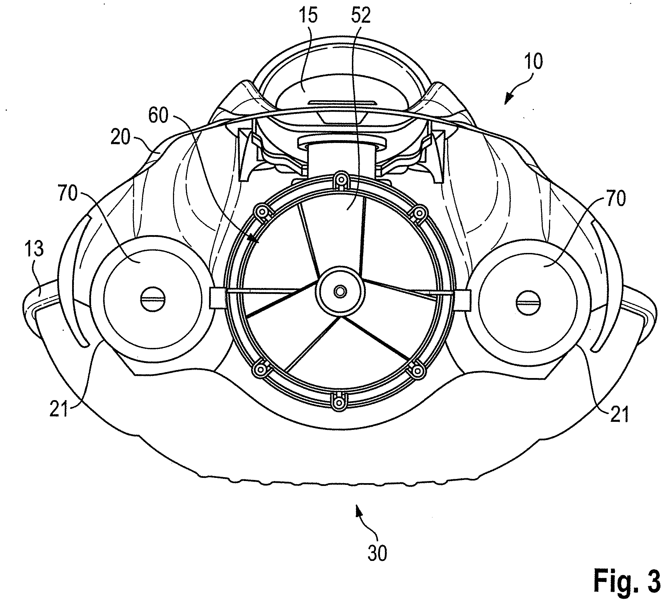

Fig. 3 lässt erkennen, dass die Aufnahmen 21 beidseitig der durch die Mittellängsachse L (siehe Fig. 2) verlaufenden Mittellängsebene des Wasserfahrzeuges angeordnet sind. Die Mittellängsebene verläuft in Fig. 3 vertikal. Die Zuordnung der beiden Aufnahmen 21 zu der Mittellängsebene ist so gewählt, dass sich eine symmetrische Bauweise ergibt. In den Aufnahmen 21 können Energiespeicher 70, die vorliegend als elektrische Akkumulatoren ausgebildet sind, angeordnet werden. Aufgrund der symmetrischen Anordnung der Aufnahmen 21 sind auch die Energiespeicher 70 symmetrisch zur Mittellängsebene angeordnet.

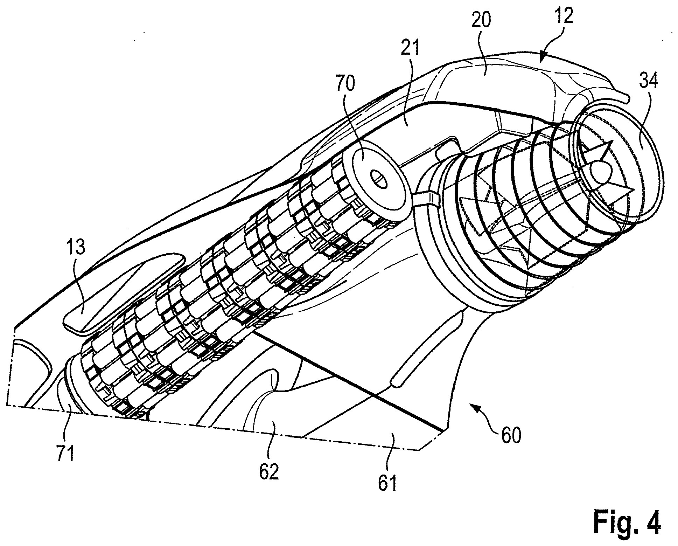

Fig. 4 gibt die Anordnung der Energiespeicher 70 in den Aufnahmen 21 zu erkennen. Wie Fig. 4 veranschaulicht, ist die Aufnahme 21 in Längsrichtung L des Wasserfahrzeuges länger dimensioniert als die Erstreckung des Energiespeichers 70 in dieser Richtung. Mithin bietet die Aufnahme 21 Platz für den alternativen Einbau eines anderen Energiespeichers 70, der eine entsprechend größere Bauweise aufweist und mithin eine höhere Leistung ermöglicht.

## Patentansprüche

1. Wasserfahrzeug mit einem Rumpf (10), der einen Strömungskanal (60) aufweist oder dem ein Strömungskanal (60) zugeordnet ist,
wobei dem Strömungskanal (60) eine motorbetriebene Wasser-Beschleunigungsanordnung, insbesondere ein Propeller zugeordnet ist, wobei der Rumpf (10) einen Flutungsraum aufweist, der über Wasserdurchtrittsöffnungen (35,33) mit der Umgebung in Verbindung steht, **dadurch gekennzeichnet, dass** der Strömungskanal (60) zwei Teilbereiche im Flutungsraum gegeneinander zumindest bereichsweise abgrenzt, und dass in jedem der Teilbereiche eine elektrische Baueinheit, nämlich ein Energiespeicher (70) angeordnet ist.

2. Wasserfahrzeug nach Anspruch 1,
**dadurch gekennzeichnet,**
**dass** in dem Flutungsraum wenigstens eine weitere elektrische Baueinheit angeordnet ist.

3. Wasserfahrzeug nach Anspruch 1 oder 2,
**dadurch gekennzeichnet,**
**dass** die weitere elektrische Baueinheit eine Steuerungselektronik (40) ein Elektro-Motor (50) ist.

4. Wasserfahrzeug nach einem der Ansprüche 1 bis 3,
**dadurch gekennzeichnet,**
**dass** der Rumpf (10) ein Oberteil (20) und ein Unterteil (30) aufweist, zwischen denen der Flutungsraum gebildet ist, und dass das Ober- und/oder das Unterteil (20. 30) zumindest bereichsweise die Außenhülle des Rumpfs (10) bilden.

5. Wasserfahrzeug nach einem der Ansprüche 1 bis 4,
**dadurch gekennzeichnet,**
**dass** das Unterteil (30) lösbar mit dem Oberteil (20) verbunden ist.

6. Wasserfahrzeug nach einem der Ansprüche 1 bis 5,
**dadurch gekennzeichnet,**
**dass** der Rumpf (10) zumindest eine Eintrittsöffnung (35) im Bereich des Bugs (11) und zumindest eine Austrittsöffnung (33) im Bereich des Hecks (12) bildet.

7. Wasserfahrzeug nach einem der Ansprüche 1 bis 6,
**dadurch gekennzeichnet,**
**dass** der Strömungskanal (60) zumindest bereichsweise im Bereich des Flutungsraums angeordnet ist und den freien Querschnitt des Flutungsraums verjüngt,
und **dass** im Bereich des verjüngten Querschnitts eine elektrische Baueinheit (Energiespeicher (70)) angeordnet ist.

8. Wasserfahrzeug nach einem der Ansprüche 1 bis 7,
**dadurch gekennzeichnet,**
**dass** in dem Flutungsraum zwei Teilbereiche baulich gegeneinander abgegrenzt sind,
wobei jedem Teilbereich eine Wassereintritts- und/oder Wasseraustrittsöffnung (35,33) zugeordnet ist.

9. Wasserfahrzeug nach einem der Ansprüche 1 bis 8,
**dadurch gekennzeichnet,**
**dass** die elektrische Baueinheit mittels einer Aufhängung befestigt ist,
und **dass** die Aufhängung die elektrische Baueinheit beabstandet zu dem den Flutungsraum begrenzenden Wandelement hält.

10. Wasserfahrzeug nach deinem der Ansprüche 1 bis 9,
**dadurch gekennzeichnet,**
**dass** es bei geflutetem Flutungsraum einen Auftrieb von mindestens 4 Kilogramm vorzugsweise 7 Kilogramm aufweist.

11. Wasserfahrzeug nach einem der Ansprüche 1 bis 10,
**dadurch gekennzeichnet,**
**dass** das Oberteil (20) mit zwei Steuergriffen (14) ausgerüstet ist, die beidseitig des Rumpfes (10) angeordnet sind, wobei vorzugsweise vorgesehen ist, dass an den Steuergriffen (14) Bedienelemente angebracht sind, um das Wasserfahrzeug zu steuern.

12. Wasserfahrzeug nach einem der Ansprüche 1 bis 11,
**dadurch gekennzeichnet,**
**dass** zwischen dem Oberteil (20) und dem Unterteil (30) ein Aufnahmeraum gebildet ist, dass der Aufnahmeraum zur Oberseite mittels einer Bodenwand (22) des Oberteils (20) begrenzt ist, und dass an der Bodenwand (22) Komponenten des Wasserfahrzeuges montiert sind.

13. Wasserfahrzeug nach einem der Ansprüche 1 bis 12,
**dadurch gekennzeichnet,**
**dass** im Bereich des Bugs (11) des Wasserfahrzeuges eine Steuerelektronik (40) montiert ist und dass in Richtung zum Heck (12) versetzt hinter der Steuerelektronik (40) ein als Elektromotor (50) ausgeführtes Antriebsaggregat geschützt in einem Gehäuse untergebracht.

14. Wasserfahrzeug nach einem der Ansprüche 1 bis 13,
**dadurch gekennzeichnet,**
**dass** eine Abtriebswelle des Motors (50) durch ein Hüllrohr (51) hindurchgeführt ist, und die Antriebswelle an dem freien Ende einen Propeller (52) trägt, der in einem Strömungskanal (60) angeordnet ist, und dass der Strömungskanal (60) von einem Hohlkörper gebildet ist, der im Bereich der Unterseite des Wasserfahrzeuges eine Ansaugöffnung (61) bildet wobei vorzugsweise vorgesehen ist, dass der Hohlkörper an seinem der Ansaugöffnung (61) in Strömungsrichtung abgewandten Ende einen Flanschbereich bildet, an dem ein Impellergehäuse (63) angeflanscht ist, wobei der Propeller (52) in das Impellerghäuse (63) ragt.

15. Wasserfahrzeug nach einem der Ansprüche 1 bis 14,
**dadurch gekennzeichnet,**
**dass** die Ansaugöffnung (61) mit einem mittig in der Ansaugöffnung (61) angeordneten Leitelement (62) stabilisiert ist.

16. Wasserfahrzeug nach einem der Ansprüche 1 bis 15,
**dadurch gekennzeichnet,**
**dass** in Strömungsrichtung hinter dem Propeller (52) ein Strömungsstator (53) angeordnet ist, dass der Propeller (52) während des Betriebs Wasser durch eine Ansaugöffnung (61) in den Strömungskanal (16) ansaugt, diese beschleunigt und es durch das Impellergehäuse (63) im Bereich eines Strahlaustritts (34) ausstößt,

17. Wasserfahrzeug nach einem der Ansprüche 1 bis 16,
**dadurch gekennzeichnet,**
**dass** das Oberteil (20) im Bereich einer/der Bodenwand (22) Aufnahmen (21) aufweist, die beidseitig des Strömungskanals (60) angeordnet sind,
wobei vorzugsweise vorgesehen ist, dass die Aufnahmen (21) beidseitig einer durch die Mittellängsachse L verlaufenden Mittellängsebene des Wasserfahrzeuges angeordnet sind,
und/oder dass in den Aufnahmen (21) Energiespeicher (70), die als elektrische Akkumulatoren ausgebildet sein können, angeordnet sind, wobei die Energiespeicher (70) symmetrisch zur Mittellängsebene angeordnet sind, und/oder dass die Aufnahme (21) in Längsrichtung L des Wasserfahrzeuges länger dimensioniert sind als die Erstreckung des Energiespeichers (70) in dieser Richtung.

18. Wasserfahrzeug nach einem der Ansprüche 1 bis 17,
**dadurch gekennzeichnet,**
**dass** die Wasserdurchtrittsöffnungen (35, 33) Wassereintritts- und Wasseraustrittsöffnung bilden, über die der Flutungsraum mit der Umgebung in Verbindung steht, zur Erzeugung einer Strömung im Flutungsraum.

## Claims

1. Watercraft with a hull (10) that has a flow channel (60) or to which a flow channel (60) is assigned,
wherein a motor-driven water acceleration arrangement, in particular a propeller, is assigned to the flow channel (60),
wherein the hull (10) has a flooding space which is connected to the environment via water passage openings (35, 33),
**characterized in that** the flow channel (60) delimits two sub-areas in the flooding space from each other at least in some areas, and **in that** an electrical component, namely an energy storage (70), is arranged in each of the sub-areas.

2. Watercraft according to claim 1,
**characterized**
**in that** at least one further electrical component is arranged in the flooding space.

3. Watercraft according to claim 1 or 2,
**characterized**
**in that** the further electrical component is control electronics (40) an electric motor (50).

4. Watercraft according to one of claims 1 to 3,
**characterized**
**in that** the hull (10) has an upper part (20) and a lower part (30) between which the flooding space is formed, and in that the upper and/or lower part (20, 30) form the outer shell of the hull (10) at least in some areas.

5. Watercraft according to any of claims 1 to 4,
**characterized**
**in that** the lower part (30) is detachably connected to the upper part (20).

6. Watercraft according to any of claims 1 to 5,
**characterized**
**in that** the hull (10) forms at least one inlet opening (35) in the area of the bow (11) and at least one outlet opening (33) in the area of the stern (12).

7. Watercraft according to any of claims 1 to 6,
**characterized**
**in that** the flow channel (60) is arranged at least in part in the region of the flooding space and reduces the free cross-section of the flooding space,
and **in that** an electrical component (energy storage (70)) is arranged in the region of the reduced cross-section.

8. Watercraft according to any of claims 1 to 7,
**characterized**
**in that** two sub-areas are structurally separated from each other in the flooding space,
wherein each sub-area is assigned a water inlet and/or water outlet opening (35, 33).

9. Watercraft according to any of claims 1 to 8,
**characterized**
**in that** the electrical component is fastened by means of a suspending device, and in that the suspending device holds the electrical component at a distance from the wall element bounding the flooding space.

10. Watercraft according to claims 1 to 9,
**characterized**
**in that** it has a buoyancy of at least 4 kilograms, preferably 7 kilograms, when the flooding space is flooded.

11. Watercraft according to any of claims 1 to 10,
**characterized**
**in that** the upper part (20) is equipped with two control handles (14) which are arranged on both sides of the hull (10), wherein it is preferably provided that control elements are attached to the control handles (14) in order to control the watercraft.

12. Watercraft according to one of claims 1 to 11,
**characterized**
**in that** a receiving space is formed between the upper part (20) and the lower part (30), in that the receiving space is bounded on the upper side by a bottom wall (22) of the upper part (20), and in that components of the watercraft are mounted on the bottom wall (22).

13. Watercraft according to any of claims 1 to 12,
**characterized**
**in that** the control electronics (40) are mounted in the bow (11) area of the watercraft and that a propulsion unit designed as an electric motor (50) is offset toward the stern (12) behind the control electronics (40) and protected in a housing.

14. Watercraft according to any of claims 1 to 13,
**characterized**
**in that** a drive shaft of the motor (50) is guided through a jacket tube (51), and the drive shaft carries a propeller (52) at its free end, which is arranged in a flow channel (60), and that the flow channel (60) is formed by a hollow body which forms a suction opening (61) in the region of the underside of the watercraft,
wherein it is preferably provided that the hollow body forms a flange region at its end facing away from the suction opening (61) in the direction of flow, to which an impeller housing (63) is flanged, wherein the propeller (52) projects into the impeller housing (63).

15. Watercraft according to any of claims 1 to 14,
**characterized**
**in that** the suction opening (61) is stabilized by a guide element (62) arranged centrally in the suction opening (61).

16. Watercraft according to any of claims 1 to 15,
**characterized**
**in that** a flow stator (53) is arranged downstream of the propeller (52) in the direction of flow, in that during operation the propeller (52) draws water through a suction opening (61) into the flow channel (16), accelerates it and ejects it through the impeller housing (63) in the region of a jet outlet (34),

17. Watercraft according to one of claims 1 to 16,
**characterized**
**in that** the upper part (20) has receptacles (21) in the region of a bottom wall (22), which are arranged on both sides of the flow channel (60),
wherein it is preferably provided that the receptacles (21) are arranged on both sides of a longitudinal center plane of the watercraft extending through the longitudinal center axis L,
and/or in that energy storages (70), which may be designed as electric accumulators, are arranged in the receptacles (21), wherein the energy storages (70) are arranged symmetrically with respect to the longitudinal center plane,
and/or in that the receptacles (21) are dimensioned in the longitudinal direction L of the watercraft to be longer than the extension of the energy storage (70) in this direction.

18. Watercraft according to any of claims 1 to 17,
**characterized**
**in that** the water passage openings (35, 33) form water inlet and water outlet openings through which the flooding space communicates with the environment to generate a flow in the flooding space.

## Revendications

1. Embarcation avec une coque (10) qui présente un canal d'écoulement (60) ou à laquelle est associé un canal d'écoulement (60), un dispositif d'accélération de l'eau entraîné par un moteur, en particulier une hélice, étant associé au canal d'écoulement (60), la coque (10) présentant un espace d'inondation qui communique avec l'environnement par des ouvertures de passage d'eau (35, 33), **caractérisé en ce que** le canal d'écoulement (60) délimite au moins par endroits deux zones partielles dans l'espace d'inondation, et **en ce qu'**une unité électrique, à savoir un accumulateur d'énergie (70), est disposée dans chacune des zones partielles.

2. Embarcation selon la revendication 1, **caractérisée en ce qu'**au moins une autre unité électrique est disposée dans l'espace d'inondation.

3. Embarcation selon la revendication 1 ou 2, **caractérisée en ce que** l'autre unité électrique est une électronique de commande (40) un moteur électrique (50).

4. Embarcation selon l'une des revendications 1 à 3, **caractérisée en ce que** la coque (10) comporte une partie supérieure (20) et une partie inférieure (30) entre lesquelles est formé l'espace d'inondation, et **en ce que** la partie supérieure et/ou la partie inférieure (20, 30) forment au moins par endroits l'enveloppe extérieure de la coque (10).

5. Embarcation selon l'une des revendications 1 à 4, **caractérisée en ce que** la partie inférieure (30) est reliée de manière amovible à la partie supérieure (20).

6. Embarcation selon l'une des revendications 1 à 5, **caractérisée en ce que** la coque (10) forme au moins une ouverture d'entrée (35) dans la zone de la proue (11) et au moins une ouverture de sortie (33) dans la zone de la poupe (12).

7. Embarcation selon l'une des revendications 1 à 6, **caractérisée en ce que** le canal d'écoulement (60) est disposé au moins par zones dans la région de l'espace d'inondation et rétrécit la section libre de l'espace d'inondation, et **en ce qu'**une unité électrique (accumulateur d'énergie (70)) est disposée dans la région de la section rétrécie.

8. Embarcation selon l'une des revendications 1 à 7, **caractérisée en ce que** deux zones partielles sont séparées l'une de l'autre dans l'espace d'inondation, une ouverture d'entrée et/ou de sortie d'eau (35, 33) étant associée à chaque zone partielle.

9. Embarcation selon l'une des revendications 1 à 8, **caractérisée en ce que** l'unité électrique est fixée au moyen d'une suspension et **en ce que** la suspension maintient l'unité électrique à distance de l'élément de paroi délimitant l'espace d'inondation.

10. Embarcation selon l'une des revendications 1 à 9, **caractérisée en ce qu'**elle présente une flottabilité d'au moins 4 kilogrammes, de préférence 7 kilogrammes, lorsque l'espace d'inondation est inondé.

11. Embarcation selon l'une des revendications 1 à 10, **caractérisée en ce que** la partie supérieure (20) est équipée de deux poignées de commande (14) disposées de part et d'autre de la coque (10), des éléments de commande étant de préférence prévus sur les poignées de commande (14) afin de commander l'embarcation.

12. Embarcation selon l'une des revendications 1 à 11, **caractérisée en ce qu'**un espace de logement est formé entre la partie supérieure (20) et la partie inférieure (30), **en ce que** l'espace de logement est délimité vers le haut par une paroi de fond (22) de la partie supérieure (20), et **en ce que** des composants de l'embarcation sont montés sur la paroi de fond (22).

13. Embarcation selon l'une des revendications 1 à 12, **caractérisée en ce qu'**un système électronique de commande (40) est monté dans la zone de la proue (11) de l'embarcation et **en ce qu'**un groupe d'entraînement réalisé sous la forme d'un moteur électrique (50) est logé de manière protégée dans un boîtier, décalé vers la poupe (12) derrière le système électronique de commande (40).

14. Embarcation selon l'une des revendications 1 à 13, **caractérisée en ce qu'**un arbre d'entraînement du moteur (50) traverse un tube enveloppe (51) et que l'arbre d'entraînement porte à son extrémité libre une hélice (52) qui est disposée dans un canal d'écoulement (60), et **en ce que** le canal d'écoulement (60) est formé par un corps creux qui forme une ouverture d'aspiration (61) dans la zone de la face inférieure de l'embarcation, de préférence le corps creux formant, à son extrémité opposée à l'ouverture d'aspiration (61) dans le sens d'écoulement, une zone de bride sur laquelle est bridé un carter d'hélice (63), l'hélice (52) faisant saillie dans le carter d'hélice (63).

15. Embarcation selon l'une des revendications 1 à 14, **caractérisée en ce que** l'ouverture d'aspiration (61) est stabilisée par un élément de guidage (62) disposé au centre de l'ouverture d'aspiration (61).

16. Embarcation selon l'une des revendications 1 à 15, **caractérisée en ce qu'**un stator d'écoulement (53) est disposé en aval de l'hélice (52) dans le sens d'écoulement, que l'hélice (52) aspire de l'eau pendant le fonctionnement à travers une ouverture d'aspiration (61) dans le canal d'écoulement (16), l'accélère et la refoule à travers le carter d'hélice (63) dans la zone d'une sortie de jet (34),

17. Embarcation selon l'une des revendications 1 à 16, **caractérisée en ce que** la partie supérieure (20) présente, dans la zone d'une paroi de fond (22), des logements (21) qui sont disposés des deux côtés du canal d'écoulement (60), étant de préférence prévu que les logements (21) soient disposés des deux côtés d'un plan longitudinal médian de l'embarcation passant par l'axe longitudinal médian L, et/ou que des accumulateurs d'énergie (70), qui peuvent être réalisés sous forme d'accumulateurs électriques, soient disposés dans les logements (21), les accumulateurs d'énergie (70) étant disposés symétriquement par rapport au plan longitudinal médian, et/ou que les logements (21) sont dimensionnés dans la direction longitudinale L de l'embarcation de manière plus longue que l'étendue de l'accumulateur d'énergie (70) dans cette direction.

18. Embarcation selon l'une des revendications 1 à 17, **caractérisée en ce que** les ouvertures de passage d'eau (35, 33) forment des ouvertures d'entrée et de sortie d'eau par lesquelles l'espace d'inondation communique avec l'environnement afin de créer un courant dans l'espace d'inondation.
